Europäisches Patentamt

**European Patent Office**

**Office européen des brevets**

(11) Numéro de publication: **0 274 327 B1**

# (12) FASCICULE DE BREVET EUROPEEN

(45) Date de publication de fascicule du brevet: **01.07.92**  (51) Int. Cl.5: **G06F 13/32**

(21) Numéro de dépôt: **87402946.5**

(22) Date de dépôt: **21.12.87**

(54) Système d'échanges d'informations entre une mémoire et des organes périphériques.

(30) Priorité: **22.12.86 FR 8617930**

(43) Date de publication de la demande:
**13.07.88 Bulletin 88/28**

(45) Mention de la délivrance du brevet:
**01.07.92 Bulletin 92/27**

(84) Etats contractants désignés:
**DE GB IT SE**

(56) Documents cités:
**EP-A- 0 006 436
US-A- 4 181 938
US-A- 4 591 973**

**IBM TECHNICAL DISCLOSURE BULLETIN, vol.
21, no. 7, décembre 1978, pages 2633-2645,
New York, US; D.M. NAGEL et al.:
"Programmable communications subsystem
having controller incorporating microprocessor"**

(73) Titulaire: **SOCIETE ANONYME DE TELECOM-
MUNICATIONS (S.A.T.)
40 avenue de New York
F-75116 Paris(FR)**

(72) Inventeur: **Courboulay, Pierre Louis
41, rue Cantagrel
F-75631 Paris Cedex 13(FR)**

(74) Mandataire: **Arnaud, Jean Pierre Alfred
Cabinet Arnaud 94 rue Saint-Lazare
F-75009 Paris(FR)**

## Description

La présente invention concerne les systèmes d'échanges d'informations entre une mémoire centrale et des organes périphériques lorsque la cadence des échanges est très élevée et lorsque la mémoire est une mémoire DMA (Direct Memory Access).

De tels problèmes se rencontrent en informatique, dans toutes les techniques de traitement du signal, de l'image, de données et en particulier dans le domaine de la télématique et des télécommunications. En effet, le développement des services conduit à élargir la fonction assurée par l'unité centrale d'un autocommutateur et accroît la quantité d'informations véhiculées par celui-ci. Les centraux téléphoniques peuvent en effet recevoir non seulement de la parole, mais des données, des signaux d'image ou toute autre information numérique codée de façon appropriée. Ceci impose une gestion des échanges d'informations entre un très grand nombre de circuits périphériques par un processeur central associé à une mémoire vive commune.

L'invention vise à gérer ces échanges entre un très grand nombre de périphériques et une mémoire DMA, ces informations étant disponibles sur un bus de données associé à un bus d'adresses, et ceci en interrompant le moins possible le processeur central.

Il est bien connu que les unités de traitement sont formées d'un processeur central associé à une mémoire vive qui est accessible au moyen d'un bus d'adresses, associé à un bus de données ; ces bus, en combinaison avec le bus de commande, sont habituellement appelés "système de bus". Le traitement effectué par le processeur est limité par le temps requis pour transférer les instructions et le temps requis pour inscrire ou lire les données dans la mémoire. La technique DMA par laquelle les données sont transférées directement dans la mémoire vive sans même nécessiter d'instruction du processeur central est déjà connue. Tout échange avec la mémoire DMA est effectué au moyen du bus et le processeur central ne peut, pendant ce transfert, utiliser le bus. Lorsqu'une grande pluralité de périphériques est raccordée au système de bus, il est utile, d'une part, de régler les conflits d'accès au système de bus et à la mémoire DMA et, d'autre part, d'interrompre le moins possible le processeur central. Or, habituellement, le volume de travail lié aux initialisations et aux fins de transfert de messages ainsi qu'au traitement des interruptions impose une charge de travail importante à l'unité de traitement et un temps de réponse bref.

Le brevet des Etats-Unis d'Amérique n° 4 181 938 décrit un circuit DMA qui gère des transferts entre une mémoire commune et des organes périphériques, indépendamment d'un processeur principal et par utilisation du bus du sytème.

L'invention se propose egalement de régler les conflits d'accès à la mémoire DMA, sans surcharger le processeur central. En effet, lorsque la cadence des échanges et le nombre des périphériques sont élevés, on aboutirait vite à une surcharge du processeur central.

La présente invention vise donc à résoudre ce double problème de surcharge du processeur central et de pluralité de périphériques ayant accès au bus.

Une solution déjà connue consiste à utiliser des organes dits "contrôleurs de canaux". Cette solution est extrêmement lourde en circuits supplémentaires et rigide et elle implique l'insertion de registres intermédiaires de stockage d'adresses. En outre, elle ne décharge pas l'unité de traitement des tâches d'initialisation et de fin de traitement des informations à échanger entre l'unité centrale et les périphériques, ni du traitement des interruptions avec un temps de réponse bref.

Un exemple représentatif de systèmes de la technique antérieure est décrit dans l'article de D.M. Nagel et al. paru dans IBM Technical Disclosure Bulletin, volume 21, n° 7, décembre 1978, pages 2633 à 2645. Ce document décrit un système d'échange de messages ayant une mémoire principale associée à un processeur principal et comprenant un système de bus. Les échanges entre des périphériques et cette mémoire principale sont gérés par un système auxiliaire à processeur ayant son propre système de bus. Les messages transmis des périphériques à la mémoire principale sont d'abord transférés du périphérique aux moyens de stockage du système auxiliaire, par l'intermédiaire du système de bus du système auxiliaire, puis de ces moyens de stockage du système auxiliaire à la mémoire principale par l'intermédiaire du système de bus du système principal. Les échanges avec la mémoire sont réalisés par la technique du vol de cycle.

L'invention concerne un système d'échanges de messages qui, dans un mode de réalisation fondamental, a les mêmes fonctions que le système d'échanges de messages décrit dans ce document, mais qui a une architecture différente, permettant une réduction importante des circuits nécessaires.

Ainsi, l'invention concerne un système d'échanges de messages entre des organes périphériques et une mémoire commune, ladite mémoire étant reliée à un processeur principal par l'intermédiaire d'un système de bus, ledit système de bus comprenant un bus de données, un bus de commande, et un bus d'adresses, tout échange de message entre l'un quelconque des organes périphériques et ladite mémoire ou réciproquement etant effectué en deux transferts élémentaires, un premier transfert correspondant à une inscription du message d'un des organes périphériques dans des moyens de stockage, et un second transfert correspondant à un transfert dudit message des moyens de stockage dans la mémoire commune ou réciproquement, et le système comportant des moyens auxiliaires indépendants du processeur principal pour gérer les deux opérations de transfert effectuées entre chaque organe périphérique et la mémoire ainsi que des demandes d'interruption émanant des organes périphériques, ces moyens auxiliaires de gestion coopérant avec les moyens de stockage ; selon l'invention, les deux transferts élémentaires sont effectués au moyen du système de bus.

Selon une caractéristique très avantageuse de l'invention, les moyens auxiliaires de gestion comportent un processeur dont le temps de cycle est inférieur à la moitié de celui du processeur principal.

Il est avantageux que les moyens auxiliaires de gestion selon l'invention soient essentiellement formés d'un processeur auxiliaire recevant les informations représentatives du traitement à effectuer (transfert, interruption ou autres) au moyen d'un premier circuit, le processeur contenant en mémoire un descripteur analysant et identifiant chaque message contenu dans le registre.

Il est avantageux que le processeur auxiliaire comporte des moyens pour échanger les signaux de demande d'occupation, de libération et d'acquittement d'un système de bus avec le processeur principal et pour appliquer des adresses et des commandes sur ledit bus, ces moyens, une fois initialisés, agissant de façon autonome et laissant le processeur libre de poursuivre son travail.

Il est avantageux que le circuit transmettant les informations représentatives du traitement à effectuer au processeur auxiliaire comprenne des moyens pour appliquer au processeur auxiliaire un mot d'état représentatif d'une demande d'échange ou de transfert à effectuer ou encore représentatif d'une interruption émanant de l'un quelconque des périphériques raccordés au système de bus, le mot d'état étant reçu sur le bus de données du processeur auxiliaire et étant lu à la suite de l'application d'un signal correspondant à ce processeur.

Il est aussi avantageux que le processeur auxiliaire comprenne des moyens pour échanger, avec le processeur principal, les paramètres caractéristiques des messages échangés entre la mémoire et les contrôleurs de périphériques, préalablement ou postérieurement à un échange, l'échange de paramètres étant effectué en mode DMA.

Il est aussi avantageux que le circuit générateur d'un mot d'état destiné au processeur auxiliaire soit essentiellement formé d'un circuit pour recevoir et coder les demandes des contrôleurs périphériques en établissant une priorité entre ces demandes, d'un circuit logique de confirmation et de lecture et d'un circuit pour formuler une demande d'interruption destinée au processeur auxiliaire.

Il est aussi avantageux que le processeur auxiliaire comporte des moyens générateurs d'une trame, par exemple de remplissage, destinée à l'un quelconque des organes périphériques.

Les messages émis par les organes périphériques sont reçus soit en mode synchrone, soit en mode asynchrone par les contrôleurs de périphériques.

D'autres avantages et caractéristiques apparaîtront à la lecture de la description suivante illustrée par des dessins.

La figure 1 représente un schéma d'une unité centrale de traitement.

La figure 2 représente un schéma du système d'échanges selon l'invention.

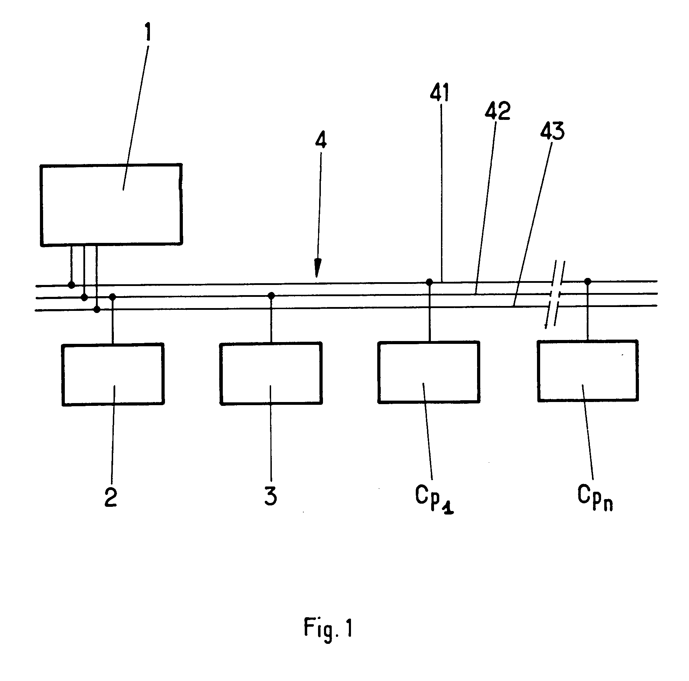

Sur la figure 1, le processeur principal 1 associé à sa mémoire morte 2 a accès à sa mémoire vive 3 au moyen d'un système de bus bidirectionnel 4 formé d'un bus de données 41 associé à un bus d'adresses 42 et à un bus de commande 43. Les périphériques peuvent être raccordés au système de bus 4 ainsi représenté soit par une liaison de type synchrone, par exemple en mode HDLC, au moyen de n dispositifs contrôleurs de périphériques $C_{p1}...C_{pn}$, soit par une liaison asynchrone au moyen d'émetteurs-récepteurs asynchrones universels UART, non représentés.

La présente description s'attache à décrire un système d'échanges d'informations issues de périphériques reliés de façon synchrone, mais il est bien évident que l'invention s'applique de la même façon à une gestion d'informations accédant au système de bus 4 au moyen de liaisons asynchrones.

En général, la transmission des données sur le bus 41 est organisée en une succession de transferts de mots, ces mots étant transmis en parallèle sur ce bus. Dans la présente application, les messages échangés sur le bus de données 41 sont des octets, mais il est bien évident que les mots pourraient se présenter avec des longueurs différentes.

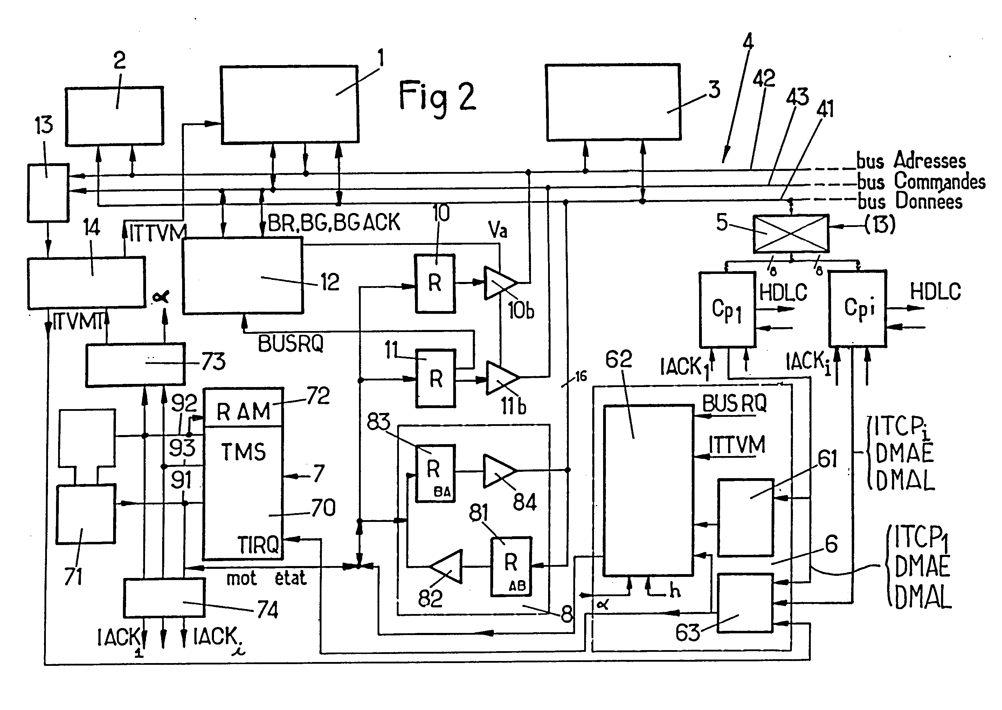

Sur la figure 2, les n contrôleurs de périphériques $C_{pi}$ sont reliés au bus 41 de données, par l'intermédiaire d'un multiplexeur bidirectionnel 5 à 16 éléments binaires côté bus 41 et 8 éléments binaires côté contrôleurs $C_{pi}$ dans la présente application.

La mémoire morte 2 de l'unité centrale est reliée au bus d'adresses 42 et au bus de données 41, et des données sont échangées entre le processeur 1 et sa mémoire morte au moyen du bus 41 de données. Cé processeur 1 fournit des adresses à sa mémoire 2 au moyen du bus d'adresse 42. Le processeur 1 peut par exemple être un microprocesseur "Motorola" MC68010 ayant la possibilité de travailler en mode asynchrone, car tous les organes dialoguant avec ce microprocesseur ne présentent pas la même vitesse de réponse ; les cycles de travail de ce microprocesseur ne sont alors pas de durée prédéterminée. Lorsque l'un des contrôleurs de périphériques $C_{pi}$ souhaite écrire des données dans la mémoire 3 en mode DMA, un signal de demande de libération du bus doit être appliqué au processeur 1 au moyen du bus de commande 43. Lorsque les données arrivent sur les contrôleurs de périphériques $C_{pi}$ (i = 1,n) au moyen de liaisons synchrones, les contrôleurs $C_{pi}$ ont essentiellement pour fonction d'effectuer une transformation série-parallèle des données. Ils fournissent donc les données en sortie en parallèle sur 8 éléments binaires, à l'entrée d'un multiplexeur 5 qui lui-même les aiguille sur les poids fort ou faible des 16 bits du bus 41 de données en fonction d'un signal fourni par un décodeur 13.

La présente invention se propose de gérer les échanges avec la mémoire 3 en mode DMA au moyen d'un second processeur 7 formé de son unité de traitement 70, de sa mémoire morte 71 et de sa mémoire vive 72. Ce microprocesseur 7 a alors pour fonction de traiter, d'une part, les demandes d'interruption issues de l'un des organes périphériques (par l'intermédiaire des contrôleurs $C_{pi}$) ou du processeur principal 1 lui-même, et, d'autre part, les demandes DMA. Ce microprocesseur 7 permet une gestion entièrement programmée, selon un programme contenu dans sa mémoire 71.

Deux types d'échanges interviennent habituellement, sur le système de bus 4 entre les contrôleurs de périphériques $C_{pi}$ et la mémoire commune DMA : les écritures DMAE et les lectures DMAL. Les divers échanges sont effectués selon l'invention au moyen de deux transferts élémentaires, un premier transfert dans un registre 8 et un second transfert DMA proprement dit de ce registre 8 à la mémoire DMA 3 ou inversement, chaque transfert élémentaire nécessitant une occupation minimale du système de bus 4.

Les divers échanges seront explicités ultérieurement à l'aide de l'illustration de plusieurs modes de réalisation.

La description suivante s'attache tout d'abord à décrire le matériel mis en oeuvre.

Le processeur 7 est par exemple un microprocesseur du type "Texas" 32010 présentant un temps de cycle de 200 ns. Ce temps de cycle est à comparer à celui du processeur principal 1 qui peut être par exemple de l'ordre de 500 ns. Le processeur 7 est relié à sa mémoire morte 71 au moyen d'un bus de données 91. Ce bus de données 91 est en outre relié, d'une part, au circuit 6 dit d'état, d'autre part, au circuit ou registre 8 de stockage et à deux registres 10 et 11. La mémoire vive 72 du processeur est adressée par le processeur 7 lui-même par l'intermédiaire de son bus d'adresse 92. Le système de bus 9 de ce processeur auxiliaire 7 comporte en outre un bus 93 de commande qui fournit des signaux d'ordre, d'une paà l'entrée d'un circuit de décodage 73, d'autre part, à l'entrée d'un circuit 74 logique. Ces deux derniers circuits 73 et 74 reçoivent en outre des informations d'adresse fournies par le bus 92.

La mémoire vive 72 de de microprocesseur 7 contient un descripteur de toutes les opérations élémentaires qui seront traitées, ainsi qu'il apparaîtra ultérieurement.

Un circuit 12 sert d'interface avec le processeur principal 1 pour échanger les divers ordres d'occupation ou de libération du système de bus 4, propres au mode DMA. Ce circuit 12 est un séquenceur fonctionnant au rythme d'une horloge à 16 MHz par exemple ; ces divers ordres sont bien connus et il s'agit d'un signal de demande d'occupation du système de bus 4 "Bus Request" ou "BR", d'un signal d'accord du processeur principal 1 "Bus Grant" ou "BG" et enfin d'un signal d'accusé de réception émis à nouveau par le séquenceur et destiné à signifier qu'il prend effectivement le système de bus 4, ce signal étant désigné "BGACK". Ce dernier ordre BGACK libère BR et BG et valide l'émission du contenu du registre 10 d'adresse et 11 de commande par l'application du signal $V_a$ à des portes 10b et 11b respectivement. Les sorties de ces portes 10b et 11b sont connectées aux bus 42 et 43 d'adresses et de commande respectivement.

Ce bus d'adresses 42 est également relié à un circuit 13 de décodage qui reçoit également les ordres du bus 43 de commande. Ce circuit de décodage 13 fournit un signal à l'entrée d'un circuit logique 14 d'interruption qui fournit un signal de demande d'interruption ITTVM à l'entrée du processeur principal 1 ainsi qu'un signal de validation d'interruption ITVMT, ce dernier étant appliqué à l'entrée du circuit 6 d'état.

Ce circuit d'état 6 est un circuit logique qui sert essentiellement d'interface entre les n contrôleurs de périphériques $C_{pi}$ et le processeur auxiliaire 7. Il sert à recevoir les demandes d'écriture DMAE ou de lecture DMAL et d'interruption $ITC_{pi}$ issues des contrôleurs $C_{pi}$ de périphériques. Un exemple de réalisation de ce circuit 6 est représenté sur la figure 2 et est explicité dans la suite à propos du fonctionnement du système d'échanges de l'invention. Ce circuit 6 se compose essentiellement d'un circuit encodeur 61, d'un circuit logique 62 et d'un autre circuit logique 63. Le circuit encodeur 61 reçoit en parallèle les signaux fournis par les n contrôleurs $C_{pi}$ ces signaux étant représentatifs d'une demande DMAE d'écriture ou DMAL de lecture et leur affectant une priorité ou encore un signal $ITC_{pi}$ de demande d'interruption émanant d'un de ces contrôleurs $C_{pi}$. Cet encodeur 61 fournit en sortie un mot d'état résultant du codage approprié de ces différentes demandes $ITC_{pi}$, DMAE, DMAL en fonction du caractère prioritaire d'un des contrôleurs $C_{pi}$ ou de tout autre choix prédéterminé. Ce mot d'état est appliqué à l'entrée du circuit logique 62 de confirmation qui reçoit également un signal de demande de bus "BUSRQ" émis par le séquenceur 12 ainsi que le signal ITTVM émis par le circuit 14. Le circuit 62 reçoit encore un signal d'horloge h fourni par l'horloge rythmant le processeur 7 et permettant de figer la logique de confirmation du circuit 62, ainsi qu'un signal $\alpha$ fourni par le décodeur 73 de ce processeur 7 et autorisant la lecture du mot d'état. Ce mot d'état peut encore être complété de façon appropriée, selon l'application souhaitée.

Le circuit 62 reçoit en outre le signal issu du circuit 63. Ce dernier circuit 63 est une porte OU recevant, d'une part, les demandes DMAE, DMAL, $IC_{pi}$ issues des n contrôleurs de périphériques $C_{pi}$, ainsi que les demandes d'interruption ITVMT fournies par le circuit 14 d'interruption.

Ce circuit 63 fournit son signal de sortie, d'une part, au circuit 62, d'autre part, au processeur auxiliaire 7. Ce dernier signal est appliqué au processeur 7 sous forme d'une demande d'interruption TIRQ. Pour connaître en détail la nature de la demande à traiter, le processeur 7 lit le mot d'état.

Le circuit logique 62 permet essentiellement de ne prendre que des états confirmés. Il est encore possible, sans changer de façon essentielle le circuit 6, de ne pas utiliser les signaux DMAE, DMAL des contrôleurs $C_{pi}$ et de n'utiliser que les demandes d'interruptions $ITC_{pi}$ pour chaque transfert d'octet, ceci réduisant la taille du circuit encodeur 61 mais occasionnant une légère surcharge du processeur auxiliaire 7, donc du système de bus du processeur principal 1, ainsi qu'on peut le comprendre d'après la suite.

Au lieu d'utiliser un circuit logique 62 de confirmation, il est également possible d'effectuer suffisamment de lectures du mot d'état formé en sortie du circuit encodeur 61 pour avoir deux fois la même valeur du mot d'état, mais ceci occasionne à nouveau une légère surcharge du processeur auxiliaire 7.

Un mot d'état peut présenter la structure suivante. Il peut être formé de 16 bits car le bus de données 91 du processeur auxiliaire 7 est formé de 16 bits, en parallèle :

- le bit 8 indique un cycle DMA demandé par le processeur 7 et non encore effectué,
- le bit 7 peut être programmé par le processeur 7 et permet de masquer les interruptions en provenance des contrôleurs $C_{pi}$,
- le bit 9 indique le positionnement d'une demande d'interruption du processeur principal 1,
- les bits 6 et 10 à 15 sont ainsi inutilisés,
- les bits 0 à 15 indiquent le type de la demande et le numéro du contrôleur de périphérique associé, une demande d'interruption ITVMT en provenance du processeur 1 ou une absence de demande.

Le codage de ces bits correctement complétés par un code correspondant à une constante fournit au processeur 7 l'adresse du sous-programme associé ; ceci confère au système de l'invention une économie en traitement car toute demande émanant d'un périphérique ou du processeur principal 1 permet de passer aussitôt au sous-programme approprié.

Le signal $\alpha$ est actif chaque fois que le processeur 7 effectue une lecture du mot d'état fourni par le circuit 6.

La présence d'un circuit logique 74 d'acquittement des interruptions pour générer des signaux $IACK_i$ affectés à chacun des n contrôleurs de périphériques $C_{pi}$ fait gagner un peu de temps et de charge par rapport à un acquittement fait uniquement par écriture dans des registres internes des contrôleurs $C_{pi}$ de périphériques.

Le transfert élémentaire d'un paquet d'un contrôleur $C_{pi}$ vers la mémoire DMA 3 s'effectue pour chaque octet essentiellement en deux opérations élémentaires: après réception d'une interruption et lecture d'un mot d'état sur le bus 91, le processeur auxiliaire 7 écrit dans le registre 10 d'ordre ainsi que dans le registre 11 de commande. Une demande de bus BUSRQ est alors appliquée au séquenceur 12 qui formule une demande BR d'interruption du système de bus 4 vers le processeur principal 1. Cette demande formulée par le circuit 11 indique par exemple qu'il s'agit d'un cycle DMA d'écriture et que les données sont des bits de poids faible ou de poids fort. Le processeur 1 envoie un signal d'attribution de bus BG au séquenceur 12 qui lui renvoie le signal d'accusé de réception BGACK pour signifier qu'il prend le système de bus, et ceci libère BR et BG. Simultanément, le processeur auxiliaire 7 possède un compteur qui est incrémenté et qui peut suivre toutes les opérations effectuées sur son bus 91 et en particulier sur les données traitées des contrôleurs de périphériques $C_{pi}$. Le descripteur de la mémoire vive 92 permet de garder en mémoire toutes les opérations qui sont effectuées. Ce descripteur est chargé en mémoire vive du processeur 7, lors de l'initialisation du système, sous la commande du processeur central, à partir d'un programme conservé dans la mémoire morte 2 de celui-ci. Le processeur 7 écrit ainsi dans le registre 10 l'adresse du contrôleur de périphérique $C_{pi}$ qui est sélectionné, en la lisant sur le mot d'état présent sur le bus 91.

L'émission du signal BGACK par le séquenceur 12 valide l'émission des registres d'adresse 10 et de commande 11 sur le bus 4. L'adresse est lue par le décodeur 13 qui indique au contrôleur de périphérique sélectionné $C_{pi}$ par exemple que l'opération en cours est un transfert de l'octet concerné vers le registre 81 au moyen du bus 41 de données. Dès que l'opération est terminée, le séquenceur 12 libère le bus 4, fait retomber le signal BUSRQ à son état de repos et le bus 4 redevient disponible pour le processeur principal 1.

Le processeur auxiliaire 7 peut alors lire le contenu du registre 81 et provoquer sa recopie dans le registre 83.

Le second transfert élémentaire du registre 83 vers la mémoire commune 3 intervient alors. Le processeur 7 écrit dans le registre 10 l'adresse dans la mémoire commune 3 où il va écrire l'octet ou le groupe d'octets en question, tandis qu'il inscrit dans le registre 11 s'il s'agit d'une écriture de poids fort ou faible et que l'inscription va être faite dans la mémoire 3. Le bus 43 de commande ainsi que le décodeur 13 suivent l'opération en cours. Lorsque le transfert est terminé, c'est la mémoire 3 qui indique que le cycle est terminé.

C'est le processeur principal 1 qui indique au processeur auxiliaire 7, par une écriture dans sa mémoire 72, dans quelle zone de la mémoire DMA 3 l'octet va être inscrit. Pour chaque octet supplémentaire reçu par le contrôleur $C_{pi}$ de périphérique, ce contrôleur formule une demande DMA en écriture et le transfert a lieu octet par octet du contrôleur $C_{pi}$ vers le registre 8 et du registre 8 vers la mémoire commune 3. Le contrôleur $C_{pi}$ détecte la fin du paquet et la signale au processeur auxiliaire 7 par l'envoi d'un signal $ITC_{pi}$ représentatif d'une interruption (reconnue au moyen du mot d'état lu sur le bus 91). Le processeur 7 réagit rapidement à cette interruption pour vérifier que tout s'est bien déroulé puis, si cela a été prévu, il associe un nouveau descripteur au futur paquet à recevoir sur la même voie. Le processeur auxiliaire 7 envoie ensuite au processeur principal 1 un message précisant la longueur du message reçu ainsi qu'il sera explicité ultérieurement. Le processeur principal n'est pas tenu de réagir rapidement à ce message puisqu'il n'y a pas de risque de perte d'information.

Une opération inverse peut intervenir: supposons que le processeur principal 1 ait à transmettre un message constitué d'une suite d'octets rangés dans la mémoire 3 vers un organe périphérique.

Pour cela, il crée une trame HDLC à l'aide d'un contrôleur de périphérique $C_{pi}$. Il prépare alors une liste de paramètres à destinaton du processeur auxiliaire 7 dans une zone convenue de la mémoire DMA 3. Puis le processeur principal 1 envoie une demande d'interruption ITVMT par l'intermédiaire du circuit 14 au circuit 6. Le processeur auxiliaire 7 lit le mot d'état et effectue le transfert en mode DMA entre la mémoire 3 et sa propre mémoire 72. Le processeur 7 analyse les paramètres qui comprennent la longueur du message, l'adresse de ce message dans la mémoire commune 3 et le numéro i du contrôleur de périphérique sélectionné. Le processeur auxiliaire 7 intialise le contrôleur $C_{pi}$ par une séquence de lectures et d'écritures de registres internes du contrôleur $C_{pi}$ en utilisant une suite de transferts élémentaires en mode DMA entre le processeur auxiliaire et le contrôleur sélectionné $C_{pi}$. Dès que le contrôleur $C_{pi}$ est prêt à commencer le transfert, il positionne le signal DMAE, c'est-à-dire une demande d'écriture DMA pour le premier octet ainsi que pour tous ceux formant le message. Ce signal DMAE provoque une interruption du processeur auxiliaire 7 qui reconnaît l'origine de cette interruption par lecture du mot d'état sur son bus 91. Le processeur 7 provoque un échange élémentaire DMA d'un octet entre la zone de message de la mémoire commune 3 et le registre 8, puis un échange élémentaire DMA du même octet entre le registre 8 et le contrôleur de périphérique $C_{pi}$ sélectionné. Ceci provoque l'acquittement de la demande d'écriture DMAE. Le même échange est réitéré pour l'octet suivant jusqu'à la fin du message. Le processeur 7 tient à jour un pointeur pour connaître l'emplacement de l'octet à aller chercher. Le processeur 7 compte aussi le nombre d'octets envoyés afin de provoquer la fin du message. Pour cela, il lui suffit de ne plus envoyer d'octets en réponse à la demande DMAE. Le contrôleur de périphérique $C_{pi}$ envoie ensuite le signal $ITC_{pi}$ au processeur 7, toujours grâce au circuit 6 et au mot d'état, pour lui signaler la fin d'émission de la trame HDLC. Le processeur 7 peut alors informer le processeur principal 1 en transférant quelques paramètres dans une zone de la mémoire commune 3, toujours en mode DMA, par interruption du bus 4, puis en appliquant un signal ITTVM par l'intermédiaire du circuit logique 14.

De la même façon, un transfert élémentaire de la mémoire commune 3 vers le processeur 7 se déroule de la façon suivante : le processeur 7 inscrit dans le registre 10 l'adresse du mot à lire dans la mémoire 3. Cette adresse est fournie par sa mémoire propre 72. Le processeur 7 écrit ensuite dans le registre 11 de commande qu'il s'adresse à la mémoire 3 en lecture et qu'il veut lire l'octet de poids fort ou de poids faible ou les deux à la fois.

L'écriture dans le registre 11 de commande active le signal BUSRQ de demande de bus qui est transmis au séquenceur 12. Celui-ci positionne à son tour le signal BR de demande de bus 4 à destination du processeur principal 1. Le processeur 1 indique son acceptation de libérer le bus 4 dès la fin de son cycle en positionnant le signal BG. Lorsque le processeur 1 a libéré le bus 4, celui-ci passe sous le contrôle du séquenceur 12 qui crée des signaux analogues à ceux qui sont habituellement créés par le processeur 1 à l'aide de l'horloge. L'adresse est fournie par le registre 10, une partie des signaux de commande provenant du registre de commande 11. Le signal fourni par la mémoire commune 3, indiquant la fin du cycle mémoire, est utilisé pour provoquer la mémorisation de l'information présente sur le bus 41 de données dans le registre 81, la retombée du signal BUSRQ et la libération du bus 4 qui redevient disponible pour le processeur 1.

Par une lecture du mot d'état, le processeur 7 qui a pendant ce temps continué à travailler, sait que le cycle DMA qu'il avait demandé est terminé ; il peut donc lire le contenu du registre 81, à l'aide des portes 82, et provoquer sa recopie éventuelle dans le registre 83.

Le système de gestion des échanges selon l'invention présente de très nombreux avantages. Il permet de délester le processeur 1 d'un grand nombre de tâches, et de n'interrompre son bus 4 que le temps strictement requis pour le transfert des octets. Comie le processeur auxiliaire 7 traite à la fois des demandes d'interruption et les demandes d'écriture/lecture des périphériques, il peut être informé des erreurs éventuelles et peut dans certain cas prendre des initiatives correctives comme par exemple ignorer une trame entâchée d'erreurs. Le processeur auxiliaire 7 peut encore, comme cela est demandé dans certains protocoles, générer de lui-même des trames de remplissage, reconnaître et vérifier ce type de trame en réception et n'échanger avec le processeur principal 1 que les trames utiles.

Le séquenceur 12 peut être partagé avec un autre processeur principal, non représenté sur les dessins, cet autre processeur principal ayant également accès au bus 4 du processeur principal 1. Dans cette structure dite VME, les deux processeurs principaux deviennent alternativement maître/esclave, le second processeur principal étant lui-même relié à un grand nombre de périphériques.

Une limitation de cette extension réside dans la charge du bus 4 du processeur principal 1, mais cette extension permet l'échange de messages avec un plus grand nombre de périphériques.

Le circuit logique 6 est un exemple de réalisation, mais il serait également possible de remplacer le circuit logique de mot d'état par un circuit de connexion en guirlande ("daisy chain") sans changer le système de l'invention.

Le contenu des paramètres échangés entre le processeur principal 1 et le processeur auxiliaire 7 est libre, ce qui confère une grande souplesse dans le découpage des fonctions à effectuer par chacun de ces organes.

On choisit avantageusement, comme processeur auxiliaire 7, un microprocesseur rapide, du genre microprocesseur pour traitement du signal, par exemple de temps de cycle 200 ns. Ainsi, chaque transfert d'octet provoque une interruption du bus 4 inférieure à 1,5 $\mu$s environ, ce qui optimise le système de l'invention.

En outre, le volume de matériel est réduit au minimum par le fait que toutes les fonctions n'existent qu'en un seul exemplaire. Par exemple, la fonction séquenceur peut même être partagée avec d'autres organes ayant besoin d'accéder à la mémoire DMA 3.

**Revendications**

1. Système d'échanges de messages entre des organes périphériques et une mémoire commune (3), ladite mémoire étant reliée à un processeur principal (1) par l'intermédiaire d'un système de bus (4), ledit système de bus (4) comprenant un bus de données (41), un bus de commande (43), et un bus d'adresses (42), tout échange de message entre l'un quelconque des organes périphériques et ladite mémoire (3) ou réciproquement etant effectué en deux transferts élémentaires, un premier transfert correspondant à une inscription du message d'un des organes périphériques dans des moyens (8) de stockage, et un second transfert correspondant à un transfert dudit message des moyens (8) de stockage dans la mémoire commune (3) ou réciproquement, et le système comportant des moyens auxiliaires (6, 7) indépendants du processeur principal pour gérer les deux opérations de transfert effectuées entre chaque organe périphérique et la mémoire (3) ainsi que des demandes d'interruption (ITCP$_i$, DMAE, DMAL) émanant des organes périphériques, ces moyens auxiliaires (6, 7) de gestion coopérant avec les moyens de stockage (8), caractérisé en ce que les deux transferts élémentaires sont effectués au moyen du système de bus (4).

2. Système selon la revendication 1, caractérisé en ce que les moyens auxiliaires (6, 7) de gestion comportent un processeur dont le temps de cycle est inférieur à la moitié de celui du processeur principal (1).

3. Système selon l'une des revendications 1 et 2, caractérisé par le fait que lesdits moyens auxiliaires (6, 7) de gestion sont essentiellement formés d'un processeur auxiliaire (7) recevant des informations représentatives du traitement à effectuer (transfert, interruption ou autre) au moyen d'un circuit (6), le processeur auxiliaire (7) contenant, en mémoire, un descripteur analysant et identifiant chaque message contenu dans les moyens de stockage (8).

4. Système selon l'une quelconque des revendications 1 à 3, caractérisé par le fait que le processeur auxiliaire (7) comporte des moyens (10, 11, 12) pour échanger des signaux de demande d'occupation, de libération et d'acquittement du système de bus (4) avec le processeur principal (1), et pour appliquer des adresses et des commandes sur ce bus, ces moyens (10, 11, 12), une fois initialisés, agissant de façon autonome et laissant le processeur auxiliaire (7) libre de poursuivre son travail.

5. Système selon l'une quelconque des revendications 1 à 4, caractérisé par le fait que le circuit (6) permettant la réception des informations par le processeur auxiliaire (7) comprend des moyens pour appliquer au processeur auxiliaire (7) un mot d'état représentatif d'une demande d'échange ou de transfert à effectuer ou encore d'interruption émanant de l'un quelconque des périphériques raccordés au système de bus (4), le mot d'état étant reçu sur le bus de données du processeur auxiliaire (7) et étant lu à la suite de l'application d'un signal (TIRQ) au processeur auxiliaire (7).

6. Système selon l'une quelconque des revendications 1 à 5, caractérisé par le fait que le processeur auxiliaire (7) comprend des moyens pour échanger, avec le processeur principal (1), les paramètres caractéristiques des messages échangés entre la mémoire commune (3) et les contrôleurs de périphériques ($C_{pi}$) préalablement ou postérieurement à un échange, l'échange des paramètres étant effectué en mode DMA.

7. Système selon l'une des revendications 5 et 6, caractérisé par le fait que les moyens (6) pour générer un mot d'état à destination du processeur auxiliaire (7) sont essentiellement formés d'un circuit (61) pour recevoir et coder les demandes des contrôleurs de périphériques ($C_{pi}$) en établissant une priorité entre ces demandes, d'un circuit logique de confirmation et de lecture (62) et d'un circuit (63) pour formuler une demande d'interruption (TIRQ) destinée au processeur auxiliaire (7).

8. Système selon l'une quelconque des revendications 1 à 7, caractérisé par le fait que le processeur auxiliaire (7) comporte des moyens pour générer une trame, par exemple de remplissage, vers l'un quelconque des organes périphériques.

9. Système selon l'une quelconque des revendications 1 à 8, caractérisé par le fait que les messages émis par les organes périphériques sont reçus en mode synchrone par les contrôleurs de périphériques ($C_{pi}$).

10. Système selon l'une quelconque des revendications 1 à 8, caractérisé par le fait que les messages émis par les organes périphériques sont reçus en mode asynchrone par les contrôleurs de périphériques ($C_{pi}$).

**Claims**

1. A system for interchanging messages between peripheral members and a common memory (3), said memory being connected to a main processor (1) via a system bus (4), said system bus (4) comprising a data bus (41), a control bus (43), and an address bus (42), all message interchanges between any one of the peripheral members and said memory (3) or vice versa being performed as two unit transfers, a first transfer corresponding to a message from one of the peripheral members being written in storage means (8), and a second transfer corresponding to said message being transferred from the storage means (8) into the common memory (3), or vice versa, and the system including auxiliary means (6, 7) independent from the main processor for controlling both of the transfer operations performed between each peripheral member and the memory (3) and also interrupt requests (ITCP$_i$, DMAE, DMAL) coming from peripheral members, said auxiliary control means (6, 7) co-operating with the storage means (8), the system being characterized in that both of the unit transfers are performed via the system bus (4).

2. A system according to claim 1, characterized in that the auxiliary control means (6, 7) include a processor whose cycle time is less than half the cycle time of the main processor (1).

3. A system according to claim 1 or 2, characterized by the fact that said auxiliary control means (6, 7) are essentially formed by an auxiliary processor (7) receiving information representative of the treatment to be performed (transfer, interrupt, or other) by means of a circuit (6), the auxiliary processor (7) containing in memory a descriptor that scans and identifies each message contained in the storage means (8).

4. A system according to any one of claims 1 to 3, characterized by the fact that the auxiliary processor (7) includes means (10, 11, 12) for interchanging signals with the main processor (1) requesting occupation, release, and acknowledgement of the bus system (4), and for applying addresses and commands on said bus, said means (10, 11, 12), once initialized, acting independently and leaving the auxiliary processor (7) free to continue its work.

5. A system according to any one of claims 1 to 4, characterized by the fact that the circuit (6) enabling the auxiliary processor (7) to receive information comprises means for applying a status word to the auxiliary processor (7) representative of a request for an interchange or a transfer to be performed or an interrupt coming from any one of the peripherals connected to the bus system (4), the status word being received on the data bus of the auxiliary processor (7) and being read after application of a signal (TIRQ) to the auxiliary processor (7).

6. A system according to any one of claims 1 to 5, characterized by the fact that the auxiliary processor (7) includes means for interchanging with the main processor (1) the characteristic parameters of the messages interchanged between the common memory (3) and the peripheral controllers ($C_{pi}$) before or after an interchange, the parameters being interchanged in DMA mode.

7. A system according to claim 5 or 6, characterized by the fact that the means (6) for generating a status word destined for the auxiliary processor (7) are essentially constituted by a circuit (61) for receiving and encoding requests from the peripheral components ($C_{pi}$) by establishing priority between such requests, a confirmation and reading logic circuit (62), and a circuit (63) for forming an interrupt request (TIRQ) destined for the auxiliary processor (7).

8. A system according to any one of claims 1 to 7, characterized by the fact that the auxiliary processor (7) includes means for generating a frame, e.g. a filler frame for sending to any of the peripheral members.

9. A system according to any one of claims 1 to 8, characterized by the fact that the messages sent by the peripheral members are received in synchronous mode by the peripheral controllers ($C_{pi}$).

10. A system according to any one of claims 1 to 8, characterized by the fact that the messages sent by the peripheral members are received in asynchronous mode by the peripheral controllers ($C_{pi}$).

**Patentansprüche**

1. System zum Austausch von Nachrichten zwischen peripheren Organen und einem gemeinsamen Speicher (3), wobei dieser Speicher mit einem Hauptprozessor (1) über ein Bussystem (4) verbunden ist, das einen Datenbus (41), einen Steuerbus (43) und einen Adressenbus (42) enthält, wobei jeder Austausch von Nachrichten zwischen einem beliebigen peripheren Organ und dem gemeinsamen Speicher (3) oder umgekehrt in zwei elementaren Übertragungen erfolgt, von denen eine erste Übertragung dem Einschreiben der Nachricht eines der peripheren Organe in Speichereinrichtungen (8) entspricht, während eine zweite Übertragung dem Übergang dieser Nachricht von den Speichereinrichtungen in den gemeinsamen Speicher (3) oder umgekehrt entspricht, und wobei das System weiterhin Hilfseinrichtungen (6, 7) enthält, die unabhängig vom Hauptprozessor sind und die beiden Übertragungsvorgänge erzeugen, die zwischen jedem peripheren Organ und dem gemeinsamen Speicher stattfinden, ebenso wie Unterbrechungsbefehle ($ITCP_i$, DMAE, DMAL), die von peripheren Organen ausgehen, wobei diese Hilfseinrichtungen (6, 7) mit den Speichereinrichtungen (8) zusammenwirken, dadurch gekennzeichnet, daß die beiden elementaren Übertragungen mit Hilfe des Bussystemes (4) durchgeführt werden.

2. System nach Anspruch 1, dadurch gekennzeichnet, daß die Hilfseinrichtungen (6, 7) einen Prozessor enthalten, dessen Periodendauer kleiner als die Hälfte der Periodendauer des Hauptprozessors (1) ist.

3. System nach einem der Ansprüche 1 und 2, dadurch gekennzeichnet, daß die Hilfseinrichtungen (6, 7) im wesentlichen durch einen Hilfsprozessor (7) gebildet werden, der über einen Kreis (6) Informationen erhält, die repräsentativ für die durchzuführende Handlung (wie Übertragung, Unterbrechung oder dgl.) sind, wobei der Hilfsprozessor (7) im Speicher ein Verzeichnis enthält, das jede in den Speichereinrichtungen (8) enthaltene Nachricht analysiert und identifiziert.

4. System nach einem der Ansprüche 1 bis 3, dadurch gekennzeichnet, daß der Hilfsprozessor (7) Einrichtungen (10, 11, 12) enthält, die Befehlssignale für Belegung, Freigabe und Bezahlung zwischen dem Bussystem (4) und dem Hauptprozessor (1) austauschen und die ferner diesem Bussystem Adressen und Steuerbefehle aufgeben, wobei diese Einrichtungen (10, 11, 12) nach einmaliger Initialisierung selbsttätig arbeiten und den Hilfsprozessor (7) zur Durchführung seiner Aufgaben freigeben.

5. System nach einem der Ansprüche 1 bis 4, dadurch gekennzeichnet, daß der Kreis (6), der die Aufnahme von Informationen durch den Hilfsprozessor (7) ermöglicht, Einrichtungen enthält, die dem Hilfsprozessor (7) ein Zustandswort zuführen, das repräsentativ für einen auszuführenden Austausch oder Übertragungsbefehl oder für einen Unterbrechungsbefehl ist, der von einem der mit dem Bussystem (4) verbundenen Peripheriegeräte ausgeht, wobei das Zustandswort auf dem Datenbus des Hilfsprozessors (7) empfangen und nach Anwendung eines Signals (TIRQ) des Hilfsprozessors (7) gelesen wird.

6. System nach einem der Ansprüche 1 bis 5, dadurch gekennzeichnet, daß der Hilfsprozessor (7) Einrichtungen enthält, um mit dem Hauptprozessor (1) die charakteristischen Parameter von Nachrichten auszutauschen, die zwischen dem gemeinsamen Speicher (3) und peripheren Kontrolleinrichtungen ($C_i$) vor oder nach einem Austausch gewechselt wurden, wobei der Austausch der Parameter im DMA-Betrieb erfolgt.

7. System nach einem der Ansprüche 5 und 6, dadurch gekennzeichnet, daß die Einrichtungen (6) zur Erzeugung eines Zustandswortes mit Bestimmung für den Hilfsprozessor (7) im wesentlichen gebildet werden durch eine Schaltung (61), die die Befehle der peripheren Kontrolleinrichtungen ($C_{pi}$) empfängt und kodiert und eine Priorität unter diesen Befehlen herstellt, ferner durch eine logische Bestätigungs- und Leseschaltung (62) sowie eine Schaltung (63) zur Formulierung eines Unterbrechungsbefehles (TIRQ) mit Bestimmung für den Hilfsprozessor (7).

8. System nach einem der Ansprüche 1 bis 7, dadurch gekennzeichnet, daß der Hilfsprozessor (7) Einrichtungen enthält, die eine Befehlsfolge, beispielsweise zum Auffüllen, für ein beliebiges peripheres Organ erzeugen.

9. System nach einem der Ansprüche 1 bis 8, dadurch gekennzeichnet, daß die von den peripheren Organen ausgesandten Nachrichten durch die peripheren Kontrolleinrichtungen ($C_{pi}$) im Synchronbetrieb empfangen werden.

10. System nach einem der Ansprüche 1 bis 8, dadurch gekennzeichnet, daß die von den peripheren Organen ausgesandten Nachrichten von den peripheren Kontrolleinrichtungen ($C_{pi}$) im Asynchronbetrieb empfangen werden.

Fig. 1

Fig 2